# EUROPEAN PATENT APPLICATION

(11) **EP 4 596 463 A1**
(43) Date of publication of application: **06.08.2025**
(21) Application number: 25154861.6
(22) Date of filing: 30.01.2025
(51) Int. Cl.: B65G 43/00, B65G 54/02

(54) **SYSTEMS AND METHODS FOR DETERMINING OPERATIONAL CONDITIONS OF A LINEAR MOTOR CONVEYOR SYSTEM**

(30) Priority: 02.02.2024 US 202463549366 P
(71) Applicant: ATS Corporation, Cambridge, ON N3H 4R7 (CA)
(72) Inventor: AIKENS, Stephen Fisher, Cambridge (CA); KLEINIKKINK, Albert John, Cambridge (CA)
(74) Representative: Noble, Nicholas

(57) **Abstract**

Systems and methods for determining operational conditions of a linear motor conveyor system are disclosed. Linear motor conveyor systems used in industrial/manufacturing environments comprise a plurality of linearly-moving elements, also referred to as shuttles or pallets, that operate on a track of the linear motor conveyor system. Determining operational conditions of a linear motor conveyor system involves receiving acceleration data from a linearly-moving element, and determining an operational condition of the linearly-moving element and/or the track based on the acceleration data. The operational condition can be utilized to identify anomalies in the operation of the linearly-moving element and/or track, such as anomalies related to a wheel or a bearing of the linearly-moving element, and/or anomalies related to a track section(s) on which the linearly-moving element operates.

## Description

### CROSS-REFERENCE TO RELATED APPLICATIONS

This application claims priority to United States Provisional Patent Application No. 63/549,366, filed on February 2, 2024.

### TECHNICAL FIELD

The present disclosure relates to linear motor conveyor systems and in particular to determining operational conditions of a linear motor conveyor system.

### BACKGROUND

Linear motor conveyor systems are used in industrial/manufacturing environments and comprise a plurality of linearly-moving elements, also referred to as shuttles or pallets. The linearly-moving elements are translated along or otherwise operate on a track by electrically-induced magnetic flux propelling the linearly-moving elements. The linearly-moving elements, which are utilized to convey articles along the track, can experience degradation in performance due to wear or track misalignment impacting overall performance. Identification of problems with the linear motor conveyor system currently occur during manual inspection or failure of the linearly-moving element and/or linear motor conveyor system, which makes it difficult to proactively identify issues associated with the shuttle or track that will impact the operational efficiency of the transport/conveying system.

Accordingly, additional, alternative, and/or improved systems and methods for determining operational conditions of a linear motor conveyor system remains highly desirable.

### BRIEF DESCRIPTION OF THE DRAWINGS

Further features and advantages of the present disclosure will become apparent from the following detailed description, taken in combination with the appended drawings, in which:
FIG. 1 shows a schematic representation of an example linear motor conveyor system;
FIG. 2 shows a perspective view of a track section of the linear motor conveyor system of FIG. 1;
FIG. 3 is a rear view of an example linearly-moving element having a machine readable medium;
FIG. 4 is a block diagram of an example control architecture employed in the linear motor conveyor system;
FIG. 5 shows a representation of data acquisition;
FIG. 6 shows a method of determining an operational condition of a linearly-moving element and/or the track;
FIG. 7 shows a further method of determining an operational condition of a linearly-moving element and/or the track; and
FIG. 8A-E show examples of acceleration data and frequency responses for different operational conditions.

It will be noted that throughout the appended drawings, like features are identified by like reference numerals.

### DETAILED DESCRIPTION

In accordance with one aspect of the present disclosure, a method is disclosed, comprising receiving acceleration data from a linearly-moving element operating on a track of a linear motor conveyor system, the acceleration data comprising raw acceleration data output from an accelerometer coupled to the linearly-moving element, or a frequency domain representation of the raw acceleration data; and determining an operational condition of the linearly-moving element and/or the track based on at least one of: the raw acceleration data, a time-based frequency domain representation of the raw acceleration data, and a spatial frequency domain representation of the raw acceleration data.

In some aspects, the operational condition of the linearly-moving element and/or the track is determined from the raw acceleration data, and the method comprises comparing the raw acceleration data to a threshold.

In some aspects, the method further comprises receiving position information of the linearly-moving element on the track, and wherein the operational condition of the linearly-moving element and/or the track is further determined based on the position information.

In some aspects, the operational condition of the linearly-moving element and/or the track is determined from the time-based frequency domain representation of the raw acceleration data or the spatial frequency domain representation of the raw acceleration data, and the method further comprises: determining one or more dominant frequencies of vibration in the time-based frequency domain or the spatial frequency domain; and determining the operational condition of the linearly-moving element and/or the track based on the one or more dominant frequencies of vibration.

In some aspects, determining the operational condition of the linearly-moving element and/or the track based on the one or more dominant frequencies comprises detecting an anomaly with the one or more dominant frequencies.

In some aspects, the anomaly is detected as a dominant frequency with an amplitude greater than a threshold value.

In some aspects, determining the operational condition of the linearly-moving element and/or the track based on the one or more dominant frequencies comprises comparing the determined one or more dominant frequencies of vibration to expected one or more dominant frequencies of vibration, and the anomaly is detected when the determined one or more dominant frequencies of vibration is outside of a predetermined threshold from the expected one or more dominant frequencies of vibration.

In some aspects, the received acceleration data is raw acceleration data, and the method further comprises transforming the raw acceleration data into the time-based frequency domain or the spatial frequency domain.

In some aspects, the method further comprises receiving position information of the linearly-moving element on the track, wherein the position information is used to transform the raw acceleration data into the spatial frequency domain.

In some aspects, the position information is received from an encoder coupled to the track that identifies the linearly-moving element and transmits the position information of the linearly-moving element.

In some aspects, the operational condition of the linearly-moving element and/or the track is determined from the time-based frequency domain representation of the raw acceleration data.

In some aspects, the method further comprises receiving position information of the linearly-moving element on the track, and determining a speed of the linearly-moving element from the position information, wherein the operational condition is determined further based on the speed of the linearly-moving element.

In some aspects, the position information is received from an encoder coupled to the track that identifies the linearly-moving element and transmits the position information of the linearly-moving element.

In some aspects, the operational condition of the linearly-moving element and/or the track is determined from the spatial frequency domain representation of the raw acceleration data.

In some aspects, the operational condition is associated with a wheel of the linearly-moving element.

In some aspects, the operational condition is associated with a bearing of the linearly-moving element.

In some aspects, the operational condition is associated with alignment of adjacent track sections on which the linearly-moving element operates.

In some aspects, the operational condition is associated with a particular track section on which the linearly-moving element operates.

In some aspects, the operational condition is determined based on the acceleration data in a direction perpendicular to a travel direction of the linearly-moving element operating on the track.

In accordance with another aspect of the present disclosure, a system is disclosed, comprising: a linearly-moving element operating on a track of a linear motor conveyor system; an accelerometer coupled to the linearly-moving element; and a remote processing device in communication with the linearly-moving element, the remote processing device configured to: receive acceleration data from the linearly-moving element, the acceleration data comprising raw acceleration data output from the accelerometer, or a frequency domain representation of the raw acceleration data; and determine an operational condition of the linearly-moving element and/or the track based on at least one of: the raw acceleration data, a time-based frequency domain representation of the raw acceleration data, and a spatial frequency domain representation of the raw acceleration data.

In some aspects, a processing unit of the linearly-moving element transforms the raw acceleration data into the time-based frequency domain or the spatial frequency domain, and transmits the frequency domain representation of the raw acceleration data to the remote processing device for determining the operational condition of the linearly-moving element and/or the track.

In some aspects, the remote processing device receives the raw acceleration data from the linearly-moving element, and transforms the raw acceleration data into the time-based frequency domain or the spatial frequency domain for determining the operational condition of the linearly-moving element and/or the track.

In some aspects, the system further comprises an encoder coupled to the track that identifies the linearly-moving element and transmits the position information of the linearly-moving element to the remote processing device.

In some aspects, the linearly-moving element receives inductive power from the track to power one or more components of the linearly-moving element.

The present disclosure provides methods and systems for determining an operational condition of a linear motor conveyor system. The methods and systems analyze and monitor acceleration data of the linearly-moving elements (also referred to as shuttles or pallets) to determine the operational condition of the linear motor conveyor system, which may be associated with the linearly-moving element or with the track on which the linearly-moving element operates. More specifically, acceleration data is received from a linearly-moving element operating on a track of a linear motor conveyor system. The acceleration data may comprise raw acceleration data output from an accelerometer coupled to the linearly-moving element, or a frequency domain representation of the raw acceleration data. An operational condition of the linearly-moving element and/or the track is determined based on at least one of: the raw acceleration data, a time-based frequency domain representation of the raw acceleration data, and a spatial frequency domain representation of the raw acceleration data.

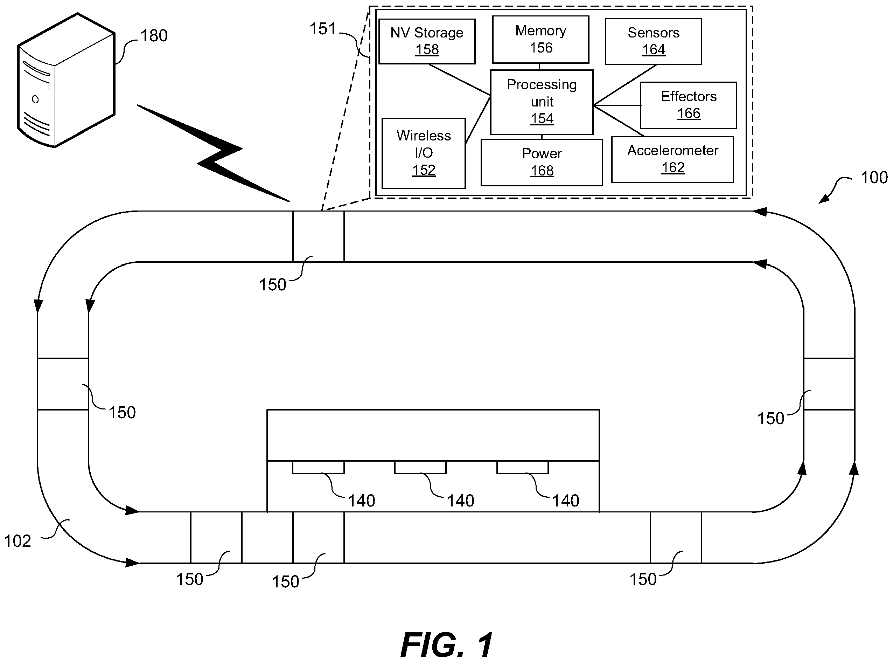

Embodiments are described below, by way of example only, with reference to Figures 1-8E.

FIG. 1 shows a schematic representation of an example linear motor conveyor system 100. The methods and systems of the present disclosure are contemplated for use in industrial/manufacturing environments, and it will thus be appreciated that this general schematic representation of an example linear motor conveyor system is non-limiting.

The system 100 includes a conveyor track 102, along which a plurality of linearly-moving elements 150 are translated. As described in more detail below, the linearly-moving elements 150 are moved by providing power to different locations of the conveyor track 102 according to a position of the linearly-moving elements 150, and therefore each of the linearly-moving elements may be independently controlled along the conveyor track 102. The linearly-moving elements 150 comprise wheels that are configured to travel along rails of the conveyor track 102. Each of the linearly-moving elements 150 can also be provided with power inductively to facilitate operation of electronics associated with the respective linearly-moving element 150 as for example described in United States Patent No. 10,300,793, hereby incorporated by reference.

As the linearly-moving elements 150 are translated along the conveyor track 102, they may be controlled to perform different operations at one or more work stations 140. For example, the linearly-moving elements 150 may be moved to a pick- and-place workstation 140 where items are placed on the shuttle or pallet comprising the linearly-moving element 150 or items are assembled on the shuttle or pallet. It will be appreciated that various types of linearly-moving elements 150 may be used on the conveyor system 100 to perform different functions.

The linearly-moving elements 150 and conveyor track 102 may be controlled by a central controller such as a programmable logic controller (PLC). Each of the linearly-moving elements 150 may comprise computer hardware elements 151 including a wireless input/output interface 152 comprising one or more wireless communication modules to communicate with the controller and other remote devices/systems, a processing unit 154, such as a microprocessor, field-programmable gate array (FPGA), application specific integrated circuit (ASIC), etc., a non-transitory computer-readable memory 156 having computer-executable instructions stored thereon at runtime and that are executable by the processing unit 154, and non-volatile storage 158 that stores the computer-executable instructions and loads the computer-executable instructions into the non-transitory computer-readable memory 156 at runtime. The linearly-moving elements 150 comprise an accelerometer 162 and may also comprise various other sensors 164, including position sensing means. Further, each of the linearly-moving elements 150 may comprise one or more mechanical effectors 166, as well as wheels, bearings, etc., that translate the linearly-moving element along the conveyor track 102. In addition to being inductively-powered using a power source from the conveyor track 102 delivered to a power receiver 168, the linearly-moving elements 150 may themselves have secondary power sources locally or inductively provided.

In accordance with the present disclosure, the processing unit 154 is configured to receive sensor data and in particular acceleration data from the accelerometer and to transmit the sensor data to a remote processing device associated with the linear motor conveyor system (e.g. to a server 180) via wireless communication module so that an operational condition of the linearly-moving element 150 can be determined. Depending on available bandwidth, the linearly-moving elements 150 may send raw sensor data to the server 180, or may perform pre-processing (e.g. cleaning/filtering the raw sensor data, transforming the acceleration data to a frequency domain, etc.) based on the computer-executable instructions stored in memory and send the pre-processed data to the server 180. The server 180 may be the central controller that controls the linearly-moving elements, or it may be separate therefrom.

As described further herein, the acceleration data from the accelerometer, possibly along with other sensor data, can be used to determine an operational condition of the linearly-moving element 150 and/or the conveyor track 102. The server 180 comprises computer hardware elements (not shown) including a wireless input/output interface comprising one or more wireless communication modules to communicate with the linearly-moving elements 150, a processing unit, such as a microprocessor, field-programmable gate array (FPGA), application specific integrated circuit (ASIC), etc., a non-transitory computer-readable memory having computer-executable instructions stored thereon at runtime and that are executable by the processing unit, and non-volatile storage that stores the computer-executable instructions and loads the computer-executable instructions into the non-transitory computer-readable memory at runtime.

The computer-executable instructions stored at the server 180 comprise instructions for analyzing acceleration data received from the linearly-moving elements 150, as described further herein. In particular, the server 180 may be configured to receive the acceleration data from a linearly-moving element 150 (e.g. the raw acceleration data output from an accelerometer coupled to the linearly-moving element, or a frequency domain representation of the raw acceleration data that has been transformed/processed by the linearly-moving element), and to determine an operational condition of the linearly-moving element and/or the track based on at least one of: the raw acceleration data, a time-based frequency domain representation of the raw acceleration data, and a spatial frequency domain representation of the raw acceleration data. For example, operational conditions that may be determined may include an issue associated with a wheel or bearing of the linearly-moving element 150, an issue associated with track-alignment of adjacent track sections or an issue associated with a specific track section of the conveyor track 102 along which the linearly-moving element 150 operates, etc. The operational conditions may be determined from the raw acceleration data, such as by comparing the raw acceleration data to a threshold value, and when the acceleration data exceeds the threshold value, determining the presence of an issue in the linearly-moving element and/or the track. Additionally or alternatively, an operational condition(s) of the linearly-moving element and/or the track may be determined by analyzing dominant frequencies of vibration (i.e. frequencies of the acceleration data), such as a magnitude and frequency of a first n (e.g. 5 or 6) peaks, in a frequency domain of the acceleration data. The frequency domain of the acceleration data may be a time-based frequency domain that is obtained by performing a Fourier transform (e.g. a Fast Fourier Transform (FFT)) on the acceleration data. Alternatively, the frequency domain of the acceleration data may be a spatial frequency domain that is obtained by associating the acceleration data with position information of the linearly-moving element. The frequencies of interest are dependent on the operational conditions being detected and specifics of the linearly-moving elements (e.g. diameter of the wheels, diameter and number of ball bearings, geometry of the bearing race, etc.), as described in more detail below. Position information may also be used to correlate acceleration peaks with particular sections of the track, and/or to determine a speed of the linearly-moving element to help determine an operational condition.

For example, issues associated with a wheel or bearing of the linearly moving element or of a track section(s) may be determined from the acceleration data by analyzing a magnitude and peak frequency of dominant frequencies of vibration in a time-based frequency domain of the acceleration data. Position information (e.g. from an linear encoder on the track 102 that reads a position of the linearly-moving element 150) may further be used to determine the operational conditions. For example, if the vibration analysis indicates that there is an issue of track-misalignment or an issue with a track section, the position information can be used to correlate the track-misalignment or track defect to a specific section(s) of the conveyor track 102. Additionally or alternatively, the position information may be used to determine a speed of the linearly-moving element, which may in turn be used for determining the operational condition of the linearly-moving element. For example, identifying an issue associated with a wheel or bearing of the linearly-moving element based on dominant frequencies of vibration in the time-based frequency domain would be related to a speed at which the linearly-moving element is travelling.

Additionally or alternatively, an operational condition associated with the linearly-moving element and/or the track may be determined from the acceleration data by analyzing a magnitude of frequencies of vibration in a position-based (i.e. spatial) frequency domain of the acceleration data. In this case, position information (e.g. from a linear encoder on the track 102 that reads a position of the linearly-moving element 150) is correlated to the acceleration data and used to transform the acceleration data to a spatial frequency domain. In the spatial frequency domain the dominant frequencies of vibration are not dependent on speed, and would be constant for a given wheel diameter, regardless of whether the acceleration data was obtained over a period that included the linearly-moving element travelling at different speeds, periods of acceleration/deceleration of the linearly-moving element, etc. Operational conditions associated with a wheel or bearing of the linearly-moving element may be identified as peaks at a given spatial frequency proportional to a circumference of the wheel. Track defects, such as track-misalignment and/or an issue with a section of a track, can be identified in spatial frequency of the acceleration data as such defects will always occur at a same position.

It will be appreciated that the sampling frequency required to obtain useful acceleration data will depend on the specific implementation of the linearly-moving element. To evaluate dominant frequencies of vibration in a time-based frequency domain, the sampling frequency may be set according to the speed at which the linearly-moving element travels. As an example, in an implementation a wheel of the linearly-moving element travelling at full speed may turn at 33 Hz. The wheel bearing would turn faster, such as between 300-1000 Hz. In this scenario, it may be desirable to perform sampling at ~2 kHz to detect a cyclical pattern. Sampling at this frequency would provide a reading at every 4mm of the wheel. To evaluate dominant frequencies in a position-based frequency domain, the sampling frequency may be set according to a desirable position resolution (e.g. every 1 mm, 4mm, etc.). It will again be appreciated however that the desired sampling rate is highly dependent on the specific implementation.

As noted above, raw sensor data may be provided from the linearly-moving element 150 to the server 180, or alternatively the acceleration data may be processed at the linearly-moving element to transform the raw acceleration data to a frequency domain (e.g. by performing a Fourier transform to convert the sensor data to the time-based frequency domain) before sending to the server 180. The server 180 determines an operational condition of the linearly-moving element and/or the track based on at least one of: the raw acceleration data, a time-based frequency domain representation of the raw acceleration data, and a spatial frequency domain representation of the raw acceleration data. If raw acceleration data is received from the linearly-moving element 150, the server 180 may transform the raw acceleration data into the time-based frequency domain or the spatial frequency domain. The server 180 analyzes the acceleration data to determine an operational condition of the linearly-moving element 150 and/or the conveyor track 102. Thresholds for determining operational conditions can be set based on experimentation and/or historical data. For example, by looking at the acceleration data (acceleration magnitude and/or frequency responses) and signal noise of a linearly-moving element operating normally on a track in good condition, threshold(s) may be set for magnitudes and/or peak frequencies that indicate various issues. When an issue is detected, the server 180 can generate an appropriate output, such as generating an alarm, stopping movement of the linearly-moving elements, etc.

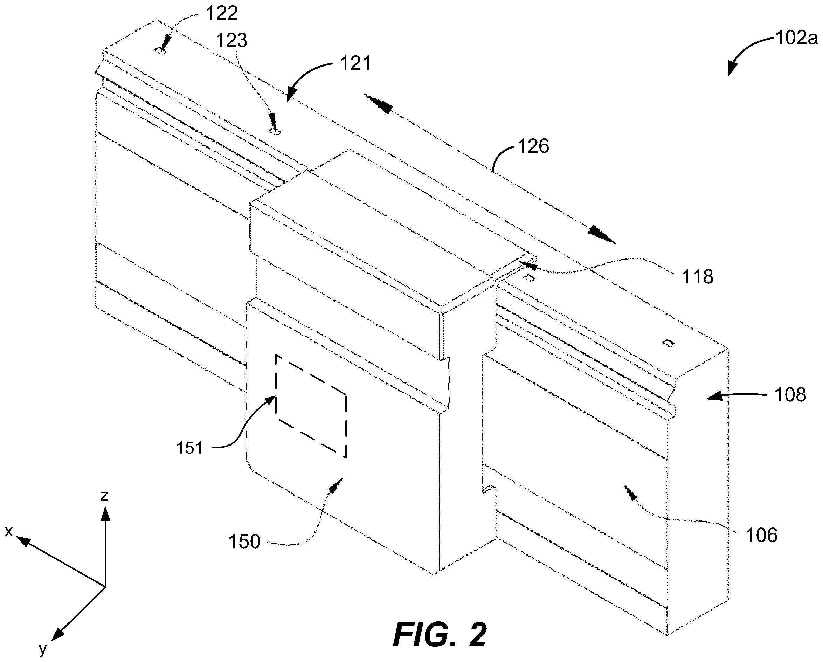

FIG. 2 shows a perspective view of a track section 102a of the linear motor conveyor system 100 of FIG. 1. The track section 102a features a linearly-moving element 150 with hardware elements 151 as described above that is configured to ride or travel along a rail 106 of the track section 102a in a first direction (e.g. x-axis direction). The track section 102a includes a frame 108 configured to support the moving element 150. Some of the principles of operation of a similar track section are described in more detail in U.S. Patent No. 8,397,896 to Kleinikkink et al., which is hereby incorporated herein by reference.

The linear motor conveyor system 100 can be composed of a plurality of track sections which are mechanically self-contained and quickly and easily separable from one another so as to be modular in nature. In this modular example, the track sections are mounted on a support (not shown) so as to align and abut one another in order to form a longer track. In order to be modular, each track section may house self-contained electronic circuitry for powering and controlling the track section and/or the moving element 150. The conveyor system 100 may also include curvilinear track sections. It will be appreciated that the connection between track sections must be precisely aligned to facilitate proper operation of the linear motor conveyor system, as any misalignment may cause damage to the linearly-moving elements operating thereon.

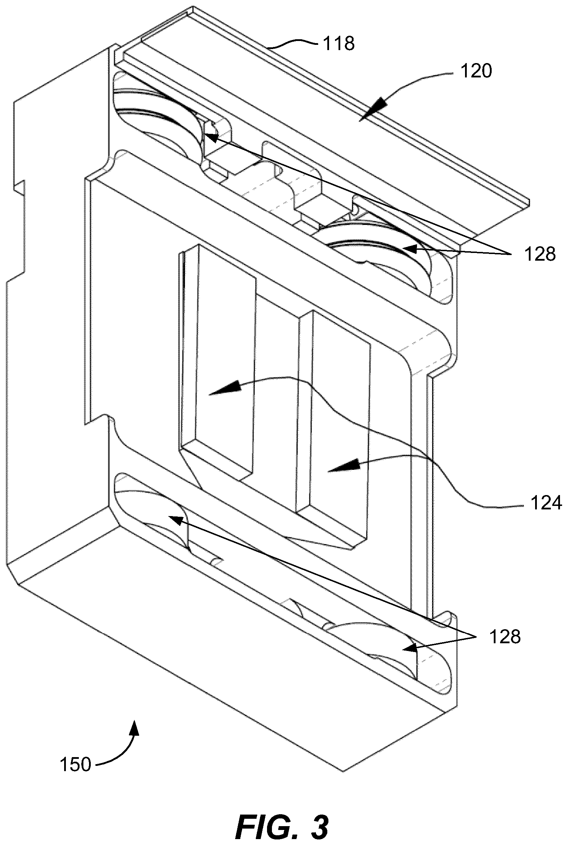

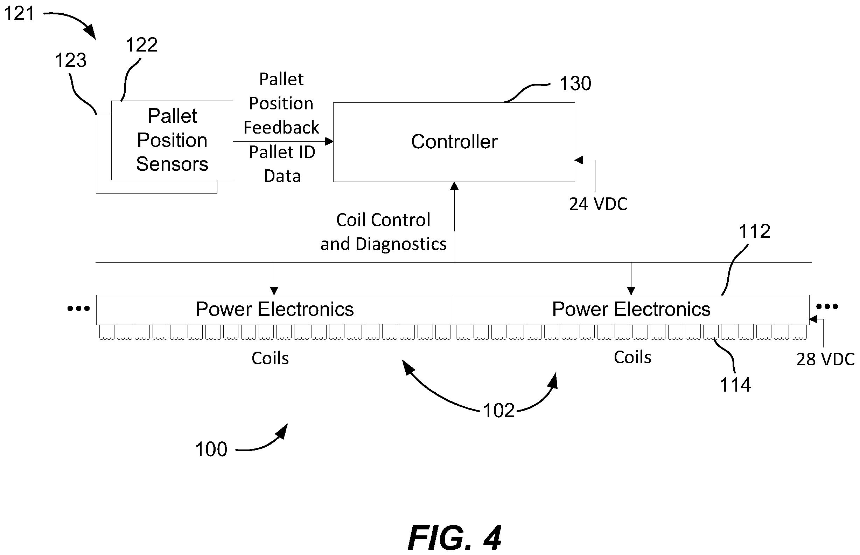

The track section 102a includes the frame 108 that houses a linear drive mechanism. The linear drive mechanism is formed as a stator armature 112 including a plurality of embedded coils 114 (as shown in FIG. 4). The embedded coils 114 can be individually excited so that an electrically-induced magnetic flux produced by the stator armature 112 is located adjacent to a given linearly-moving element 150 to be controlled, in a direction normal thereto, without affecting adjacent moving elements 150. The motive force for translating each linearly-moving element 150 arises from the magnetomotive (MMF) force produced by elements 124, such as permanent magnets, provided to each linearly-moving element 150 (shown in Fig. 3) and the stator armature 112, i.e., by the tendency of the corresponding magnetic fluxes provided by the stator armature 112 and linearly-moving element 150 to align. The central controller enables separate and independent moving MMFs to be produced along the length of the track section 102a for each moving element 150 so that each moving element 150 can be individually controlled with a trajectory profile that is generally independent of any other moving element 150. Structurally, the track section 102a may thus be broadly classified as a moving-magnet type linear brushless motor having multiple moving elements 150.

As described above, each linearly-moving element 150 comprises an accelerometer (e.g. internal to the linearly-moving element 150, as part of hardware components 151) and optionally other sensing devices. Referring again to FIG. 2, each linearly-moving element 150 may comprise an extension 118 with a machine readable medium 120. The extension 118 may be configured to interact with sensors 122, 123 provided on the track section 102a where the machine readable medium 120 and sensors 122, 123 form a position sensing system 121. The position information may be used to help determine an operational condition of the linear motor conveyor system 100, as described in more detail herein below.

In the illustration of FIG. 2, the sensors 122, 123 are located on the track section 102a and the machine readable medium 120 is located on the linearly-moving element 150. In an alternative, the sensors 122, 123 may be located on the linearly-moving element 150 and the machine readable medium 120 may be located on the track section 102a. The sensors 122, 123 are configured to read an identifier of the linearly-moving element 150 from the machine readable medium 120. The same sensors 122, 123 are configured to read a position of the linearly-moving element 150 on the track section 102a from the machine readable medium 120. It will be appreciated that other means of obtaining position information of the linearly-moving element 150 is also possible such as for example radio frequency identifiers (RFID) or Bluetooth^{™} Low-Energy (BTLE).

FIG. 3 is a rear view of an example linearly-moving element 150. The linearly-moving element 150 may have a machine readable medium 120 on the extension 118. The linearly-moving element 150 has elements 124, such as permanent magnets, that interact with the stator armature 112 and coils 114 in the corresponding track section 102 to move along direction 126 in the x-axis of FIG. 2. The moving element 150 has a plurality of wheels 128 that engage with rails of the track 106. The linearly-moving element 150 has an accelerometer 162 to measure vibration data of the linearly-moving element 150. In some embodiments, a wireless communication module 152 of the linearly-moving element 150 may comprise the accelerometer 162. It will be appreciated that the linearly-moving element 150 depicted in FIG. 3 is provided for the sake of example only and that other designs of the linearly-moving element are also possible.

FIG. 4 is a block diagram of an example control architecture employed in the linear motor conveyor system 100. A controller 130 controls the linear motor conveyor system 100 and the track sections forming conveyor track 102. The controller 130 is configured to monitor the position of and control the movement of moving elements 150 based on the position. The controller 130 may also monitor and report moving element identification data so the moving element identifier is known and can be tracked throughout the linear motor conveyor system 100. As such, the controller 130 may be used for process (i.e. manufacturing-line) control. The controller 130 may also provide a supervisory diagnostic role by monitoring the track sections (e.g., by engaging in a polling or pushing process) in order to determine the current status of any track section and whether any track section has failed. It will be understood that, in some cases, the controller 130 may directly control each of the track sections.

The controller 130 may also be connected to other devices, such as remote server 180 of FIG. 1 and/or other programmable logic controllers (PLCs), via input/output (I/O) or network modules. The linearly-moving elements may send acceleration data and position data directly to the remote server 180 of FIG. 1, or the acceleration data and position data may be sent via the controller 130 to the remote server 180. In other embodiments, the remote server processing may be provided as part of controller 130. Other PLCs may provide manufacturing-line station-processing instructions to the track sections, such as directing the next destination for a linearly-moving element 150 along the track 106, or providing station-specific motion instructions in respect of a given linearly-moving element 150.

As illustrated, the controller 130 is connected to the stator armature 112 and coils 114 in the track sections 102 and controls the coils 114 in accordance with an independent trajectory or "move" command for each moving element 150 located therein.

The controller 130 is also connected to the sensors 122, 123 situated in the track section. The controller 130 may be configured to implement a closed-loop digital servo control system that controls movement of the linearly-moving element 150 by resolving the real-time position of each linearly-moving element 150 located in the track section. The controller 130 makes use of the position sensing system 121, which supplies moving element identification data and moving element position data to the controller 130. When the machine readable medium 120 of a given linearly-moving element 150 moves over a given sensor 122, 123, moving element position feedback is transmitted to the controller 130. The controller 130 decodes the moving element position feedback to determine the position of the moving element 150.

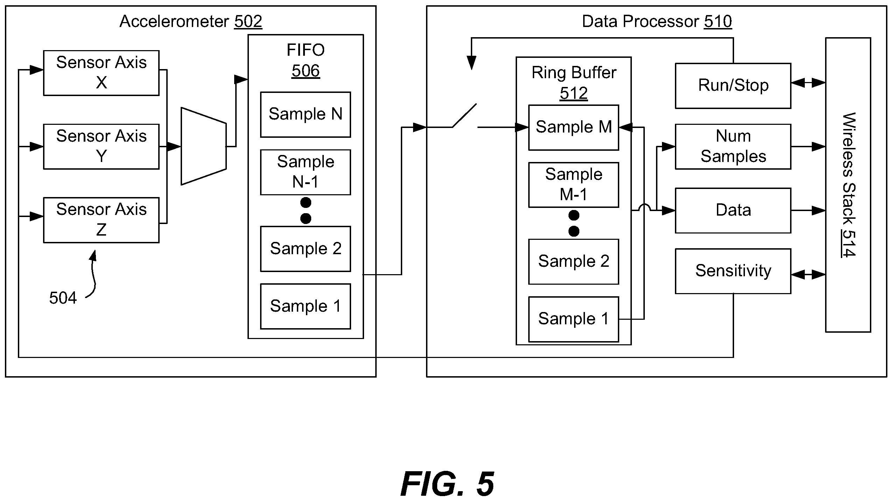

FIG. 5 shows a representation of data acquisition. Accelerometer 502, shown as accelerometer 162 in FIG. 1, provided on-board a linearly-moving element may be a tri-axial acceleration sensor that acquires acceleration sensor data 504 at a sampling frequency (Fs) and stores the sensor data in an internal First In First Out (FIFO) 506 that contains N entries with a single sample per axis (X, Y, Z). A data processor 510 periodically extracts samples from the accelerometer FIFO 506. For vibration analysis, the processor may specifically extract any subset of the acceleration data (e.g. y- and z-axis acceleration data, which are in a direction perpendicular to a travel direction, referring to the directions shown in FIG. 2). The data processor 510 may be provided in the processing unit 154 of the linearly-moving element as shown in FIG. 1. The extraction of data samples may be controlled wirelessly (e.g. parameter/process data out (run/stop)). While in the run mode the samples may be stored in M entry cyclic ring buffer 512. While in the stop mode the data acquisition is stopped and the buffer 512 is frozen. An optional parameter may be used to set a trigger location with the buffer 512 (to provide samples both before and after the event). Data is extracted for processing via the wireless stack 514. A number of remaining samples may be available via read request.

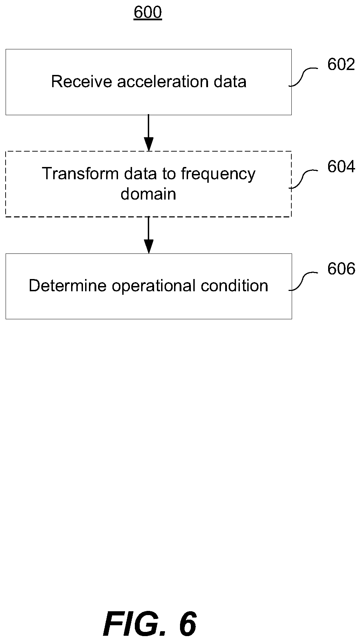

FIG. 6 shows a method 600 of determining an operational condition of a linearly-moving element and/or the track. The method 600 may be performed by a remote processing device in communication with the linearly-moving element, such as the server 180. The remote processing device may store non-transitory computer-executable instructions that when executed by a processor, configure the remote processing device to implement the method 600.

The method comprises receiving acceleration data from a linearly-moving element operating on a track of a linear motor conveyor system (602). The acceleration data may comprise raw acceleration data output from an accelerometer coupled to the linearly-moving element, or a frequency domain representation of the raw acceleration data (e.g. that has been transformed to the frequency domain by the linearly-moving element). Further, the raw acceleration data may be the acceleration readings directly from the accelerometer without further manipulation, or may include any minor manipulation of the data, the result of which is still acceleration, such as averaging multiple samples and transmitting only the average to reduce measurement noise or reduce data transmission requirements.

An operational condition of the linearly-moving element and/or the track is determined (606). The operational condition is determined based on at least one of: the raw acceleration data, a time-based frequency domain representation of the raw acceleration data, and a spatial frequency domain representation of the raw acceleration data. If raw acceleration data is received, the method may further comprise transforming the raw acceleration data into the time-based frequency domain or the spatial frequency domain (604) for determining the operational conditions. To transform the raw acceleration data into the spatial frequency domain, the method may also comprise receiving position information of the linearly-moving element, e.g. from an encoder coupled to the track that identifies the linearly-moving element and transmits the position information of the linearly-moving element.

In some embodiments, the operational condition of the linearly-moving element and/or the track is determined from the raw acceleration data, and the method comprises comparing the raw acceleration data to a threshold. Position information of the linearly-moving element on the track may also be received, and the operational condition of the linearly-moving element and/or the track may be further determined based on the position information.

In other embodiments, the operational condition of the linearly-moving element and/or the track is determined from the time-based frequency domain representation of the raw acceleration data or the spatial frequency domain representation of the raw acceleration data. To analyze the frequency domain representation of the raw acceleration data, the method may comprise determining one or more dominant frequencies of vibration in the time-based frequency domain or the spatial frequency domain, and determining the operational condition of the linearly-moving element and/or the track based on the one or more dominant frequencies of vibration. For example, the operational condition may be determined by detecting an anomaly with the one or more dominant frequencies. The anomaly may be detected as a dominant frequency with an amplitude greater than a threshold value. Additionally or alternatively, the determined one or more dominant frequencies of vibration may be compared to expected one or more dominant frequencies of vibration, and the anomaly is detected when the determined one or more dominant frequencies of vibration is outside of a predetermined threshold from the expected one or more dominant frequencies of vibration.

In some embodiments, the operational condition is associated with a wheel of the linearly-moving element. In some embodiments, the operational condition is associated with a bearing of the linearly-moving element. In some embodiments, the operational condition is associated with alignment of adjacent track sections on which with the linearly-moving element operates. In some embodiments, the operational condition is associated with a particular track section on which the linearly-moving element operates.

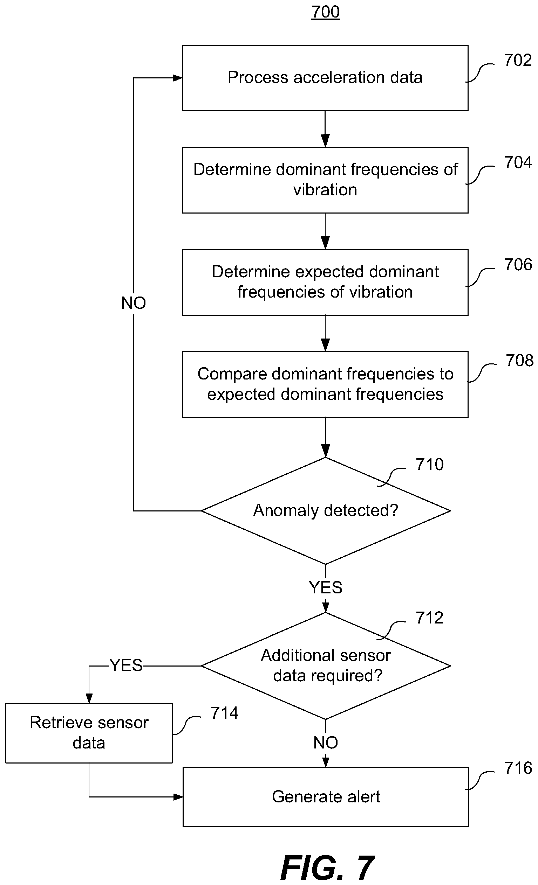

FIG. 7 shows a further method 700 of determining an operational condition of a linearly-moving element and/or the track. The method 700 comprises processing acceleration data (702) to provide the acceleration data in a frequency domain, for example by performing a Fourier transform to transform the acceleration data into a time-based frequency domain, or by mating acceleration data with position information to transform the acceleration data into a position-based (i.e. spatial) frequency domain. One or more dominant frequencies of vibration are determined (704) in the frequency domain of the acceleration data. Expected dominant frequencies are determined (706). For example, the expected dominant frequencies of vibration may correspond to acceleration data in the frequency domain for a linearly-moving element operating under a normal operating condition. The one or more dominant frequencies of vibration are compared to the expected dominant frequencies of vibration (708) to check for anomalies (e.g. anomalies with respect to the frequency of the dominant frequencies and/or a magnitude of the amplitude at the dominant frequencies).

A determination is made if there is an anomaly in the acceleration data (710). An anomaly may be detected when the determined one or more dominant frequencies is outside of a predetermined threshold from the expected one or more dominant frequencies. Additionally or alternatively, an anomaly may be detected when a dominant frequency has an amplitude greater than an anomaly threshold value. If no anomaly is detected (NO at 710), the linearly-moving element is operating normally and the method continues to process acceleration data (702).

If an anomaly is detected (YES at 710), a determination is made as to whether additional sensor data is required (712). For example, if the anomalies are indicative of track misalignment and determined in a time-based frequency domain, it may be desirable to obtain position information of the linearly-moving element to correlate the track misalignment with a particular adjacent track section. If the anomalies are indicative of a wheel or bearing issue, it may be desirable to obtain position/speed information to validate the frequency variations. If it is determined that additional sensor data is required (YES at 712), the additional sensor data is retrieved (714). For some operational conditions, no additional sensor data may be required (NO at 712). An alert may be generated (716) for the operational condition of the linearly-moving element. The linearly-moving element can then be taken out of operation for maintenance. Alternatively, if position information indicates that the anomalous condition occurs at a particular track position, the track segment where the problem occurs may be identified for repair. Trends in the operation of the system can be utilized to determine performance of the linear motor conveying system.

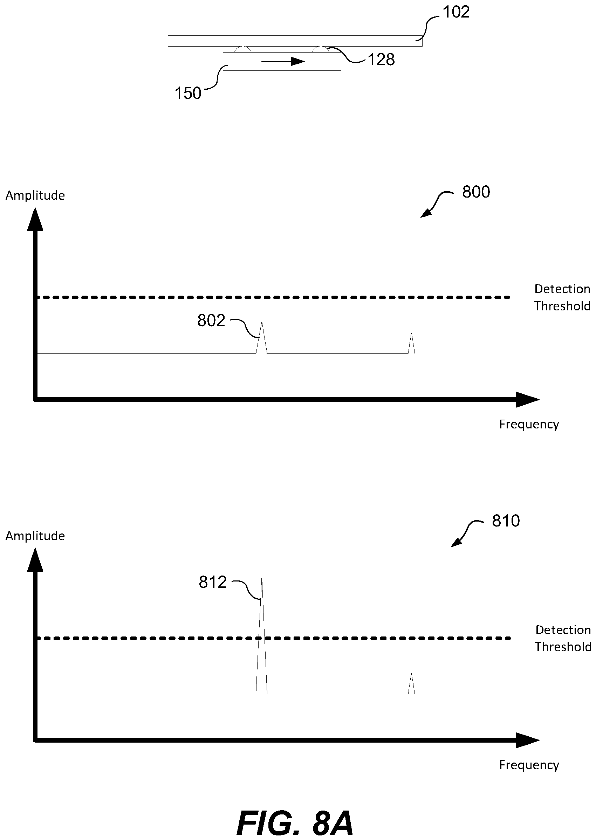

FIGs. 8A-E show examples of acceleration data and frequency responses for different operational conditions.

FIG. 8A shows examples of frequency responses relating to an operational condition of wheels 128 on a linearly-moving element 150 travelling on a track 102 of a linear motor conveyor system. The graph 800 shows a representation of amplitude vs. time-based frequency for a wheel operating normally. As seen in the graph 800, there will be a peak amplitude 802 in the frequency domain at a frequency related to a speed of the linearly-moving element and wheel circumference (and at its harmonics). The graph 810 shows a representation of amplitude vs. time-based frequency for a wheel with a defect. As seen in the graph 810, a peak amplitude 812 at a frequency related to a speed of the linearly-moving element and wheel circumference exceeds a predetermined threshold value, indicative of an anomaly associated with the wheel. Note that if the frequency domain was position-based instead of time-based, the peaks in the spatial frequency domain would be independent of the linearly-moving element speed and acceleration/deceleration of the linearly-moving element in the x-y direction, and would instead be related to a position of the linearly-moving element. Wheel defects could be identified by peak amplitudes at a spatial frequency related to wheel circumference.

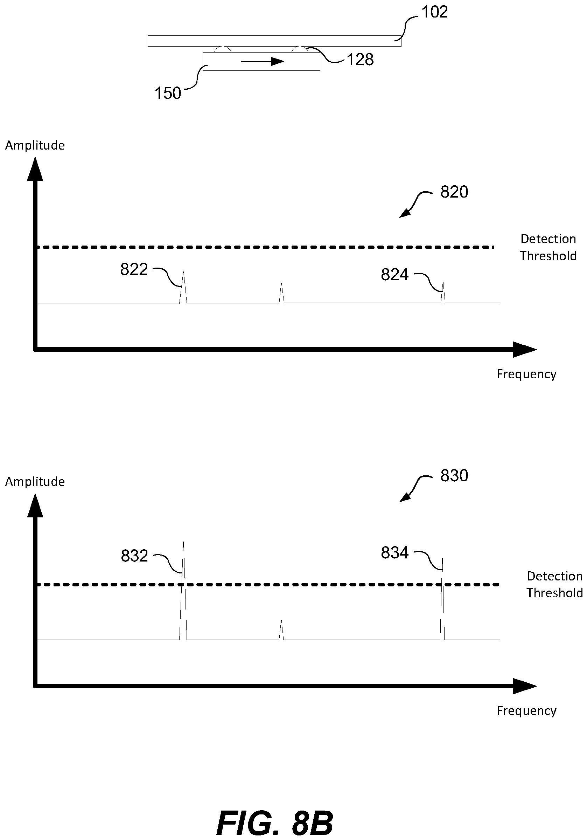

FIG. 8B shows examples of frequency responses relating to an operational condition of a bearing associated with wheel 128 on a linearly-moving element 150 travelling on a track 102 of a linear motor conveyor system. The graph 820 shows a representation of amplitude vs. time-based frequency for a bearing operating normally. As seen in the graph 820, there will be a peak amplitude 822 in the frequency domain at a frequency related to the wheel, as also seen in the graph 800 of FIG. 8A. There will also be higher frequency peaks that correspond to bearings, such as amplitude peak 824. The graph 830 shows a representation of acceleration amplitude vs. time-based frequency for a bearing with a defect. As seen in the graph 830, an amplitude peak 832 of the acceleration data at a frequency related to the wheel exceeds a predetermined threshold value due to the bearing issue. Further, a bearing issue can be seen at the higher frequency amplitude peak 834, which also exceeds the detection threshold. It will be appreciated that a detection threshold may be set differently for detecting bearing issues compared to detecting wheel issues. Similar to wheel defects, if the frequency domain was position-based instead of time-based, the peaks in the spatial frequency domain would be independent of the linearly-moving element speed and acceleration/deceleration of the linearly-moving element in the x-y direction, and would instead be related to a position of the linearly-moving element. Bearing defects could be identified by peak amplitudes at higher spatial frequencies compared to peak amplitudes corresponding to the wheel.

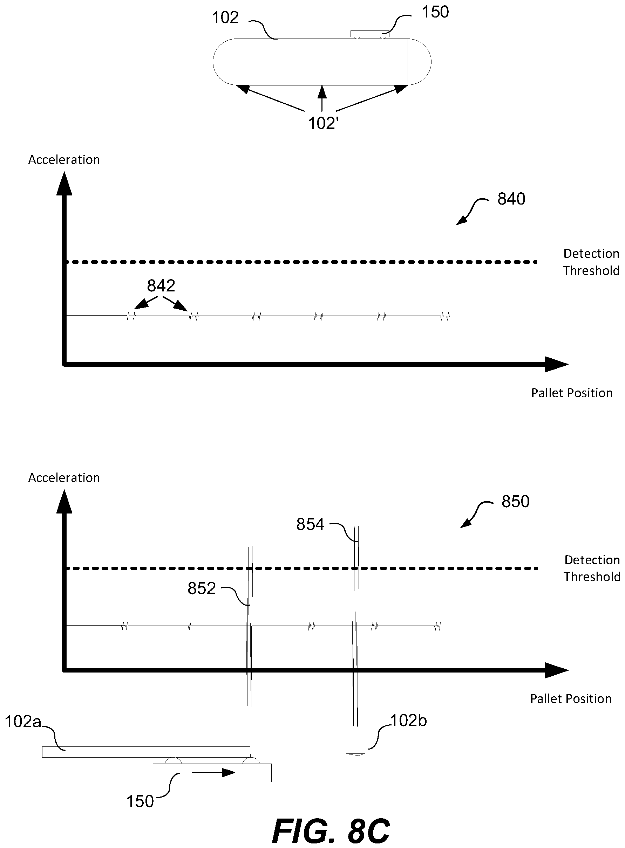

FIG. 8C shows examples of acceleration data associated with an operational condition of a track 102 of a linear motor conveyor system on which a linearly-moving element 150 operates. The track 102 comprises a plurality of modular track sections, which are joined together at track connections 102'. As seen in the graph 840, which represents acceleration data of a linearly-moving element operating on a normal track, there are small acceleration impulses 842 at track connections 102', but well under the anomaly detection threshold. The graph 850 shows acceleration data of a linearly-moving element operating on a defective track. As seen in the graph 850, misaligned track connections 102', such as between a track section 102a and adjacent track section 102b, have an acceleration impulse greater than a threshold value as shown at impulse 852. The time between pulses at a given speed can be used to confirm that a static defect exists (i.e. the defect shows on both wheels of the linearly-moving element 150). In addition, defects in a track section itself (e.g. in the rail portion of a track section) can be detected by acceleration impulses away from a track connection location, as shown at impulse 854.

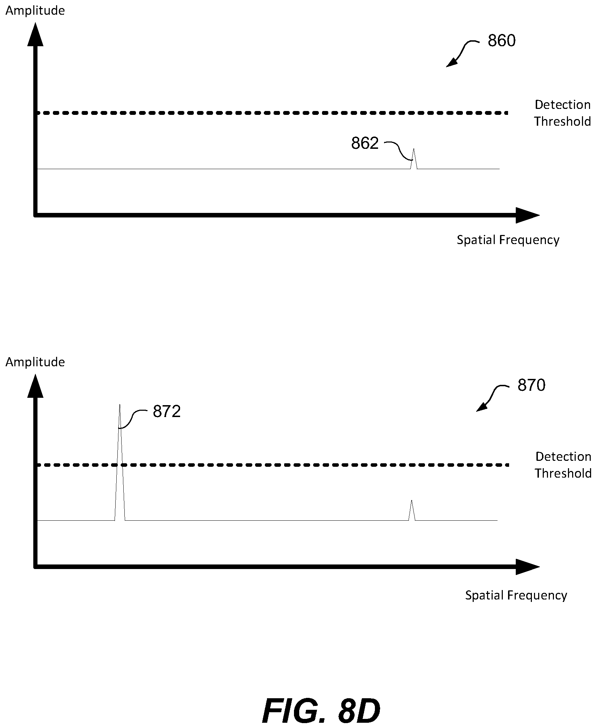

FIG. 8D shows examples of frequency responses relating to an operational condition of a track 102 of a linear motor conveyor system on which a linearly-moving element is travelling along. The graph 860 shows a representation of amplitude vs. spatial frequency for a normal track. As seen in the graph 860, there will be an amplitude peak 862 in the frequency domain for regularly spaced aligned track connections. The graph 870 shows a representation of amplitude vs. spatial frequency for a defective track. If there is a defect at a track connection due to misalignment of adjacent track sections, or if there is a defect in a rail of a given track section, there is a high magnitude peak 872 at a lower spatial frequency. Note that if the frequency domain was time-based instead of position-based, track defects could be identified by high magnitude peaks at lower frequencies, and position information could be used to identify specific track section(s) that the defect exists in.

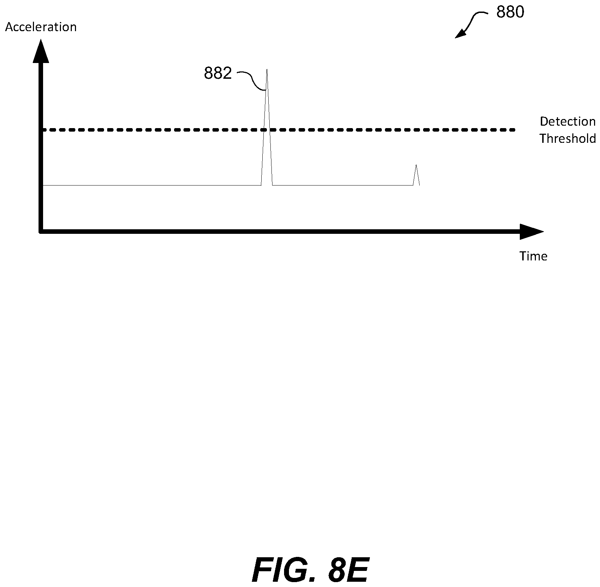

FIG. 8E shows an example of acceleration data associated with an operational condition of a track 102 of a linear motor conveyor system on which a linearly-moving element 150 operates. As seen in the graph 880, an acceleration impulse 882 of the raw acceleration data exceeds a detection threshold. In this general case, the raw acceleration data is monitored and analyzed, and if there is a peak acceleration over an expected magnitude (i.e. above the detection threshold), a fault or warning may be generated. An example of a cause of the acceleration impulse 882 could be debris on the track.

It would be appreciated by one of ordinary skill in the art that the system and components shown in the figures may include components not shown in the drawings. For simplicity and clarity of the illustration, elements in the figures are not necessarily to scale and are only schematic. It will be apparent to persons skilled in the art that a number of variations and modifications can be made without departing from the scope of the invention as described herein.

It is contemplated that any part of any aspect or embodiment discussed in this specification can be implemented or combined with any part of any other aspect or embodiment discussed in this specification.

It should be recognized that features and aspects of the various examples provided above can be combined into further examples that also fall within the scope of the present disclosure.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

## Claims

1. A method, comprising:
receiving acceleration data from a linearly-moving element operating on a track of a linear motor conveyor system, the acceleration data comprising raw acceleration data output from an accelerometer coupled to the linearly-moving element, or a frequency domain representation of the raw acceleration data; and
determining an operational condition of the linearly-moving element and/or the track based on at least one of: the raw acceleration data, a time-based frequency domain representation of the raw acceleration data, and a spatial frequency domain representation of the raw acceleration data.

2. The method of claim 1, wherein the operational condition of the linearly-moving element and/or the track is determined from the raw acceleration data, and the method comprises comparing the raw acceleration data to a threshold.

3. The method of claim 2, further comprising receiving position information of the linearly-moving element on the track, and wherein the operational condition of the linearly-moving element and/or the track is further determined based on the position information.

4. The method of claim 1, wherein the operational condition of the linearly-moving element and/or the track is determined from the time-based frequency domain representation of the raw acceleration data or the spatial frequency domain representation of the raw acceleration data, and the method further comprises:
determining one or more dominant frequencies of vibration in the time-based frequency domain or the spatial frequency domain; and
determining the operational condition of the linearly-moving element and/or the track based on the one or more dominant frequencies of vibration.

5. The method of claim 4, wherein determining the operational condition of the linearly-moving element and/or the track based on the one or more dominant frequencies comprises detecting an anomaly with the one or more dominant frequencies.

6. The method of claim 5, wherein the anomaly is detected as a dominant frequency with an amplitude greater than a threshold value, and/or
wherein determining the operational condition of the linearly-moving element and/or the track based on the one or more dominant frequencies comprises comparing the determined one or more dominant frequencies of vibration to expected one or more dominant frequencies of vibration, and the anomaly is detected when the determined one or more dominant frequencies of vibration is outside of a predetermined threshold from the expected one or more dominant frequencies of vibration.

7. The method of any one of claims 4 to 6, wherein the received acceleration data is raw acceleration data, and the method further comprises transforming the raw acceleration data into the time-based frequency domain or the spatial frequency domain.

8. The method of claim 7, further comprising receiving position information of the linearly-moving element on the track, wherein the position information is used to transform the raw acceleration data into the spatial frequency domain, and wherein the position information is received from an encoder coupled to the track that identifies the linearly-moving element and transmits the position information of the linearly-moving element.

9. The method of any one of claims 4 to 7, wherein the operational condition of the linearly-moving element and/or the track is determined from the time-based frequency domain representation of the raw acceleration data,
the method optionally further comprising receiving position information of the linearly-moving element on the track, and determining a speed of the linearly-moving element from the position information, wherein the operational condition is determined further based on the speed of the linearly-moving element, wherein the position information is received from an encoder coupled to the track that identifies the linearly-moving element and transmits the position information of the linearly-moving element.

10. The method of any one of claims 4 to 8, wherein the operational condition of the linearly-moving element and/or the track is determined from the spatial frequency domain representation of the raw acceleration data.

11. The method of any one of claims 1 to 10, wherein the operational condition is associated with one of:
a wheel of the linearly-moving element;
a bearing of the linearly-moving element;
alignment of adjacent track sections on which the linearly-moving element operates; and
a particular track section on which the linearly-moving element operates.

12. The method of any one of claims 1 to 11, wherein the operational condition is determined based on the acceleration data in a direction perpendicular to a travel direction of the linearly-moving element operating on the track.

13. A system, comprising:
a linearly-moving element operating on a track of a linear motor conveyor system;
an accelerometer coupled to the linearly-moving element; and
a remote processing device in communication with the linearly-moving element, the remote processing device configured to:
receive acceleration data from the linearly-moving element, the acceleration data comprising raw acceleration data output from the accelerometer, or a frequency domain representation of the raw acceleration data; and
determine an operational condition of the linearly-moving element and/or the track based on at least one of: the raw acceleration data, a time-based frequency domain representation of the raw acceleration data, and a spatial frequency domain representation of the raw acceleration data.

14. The system of claim 13, wherein:
a processing unit of the linearly-moving element transforms the raw acceleration data into the time-based frequency domain or the spatial frequency domain, and transmits the frequency domain representation of the raw acceleration data to the remote processing device for determining the operational condition of the linearly-moving element and/or the track; or
the remote processing device receives the raw acceleration data from the linearly-moving element, and transforms the raw acceleration data into the time-based frequency domain or the spatial frequency domain for determining the operational condition of the linearly-moving element and/or the track.

15. The system of claim 13 or claim 14, further comprising an encoder coupled to the track that identifies the linearly-moving element and transmits the position information of the linearly-moving element to the remote processing device.
